# EUROPÄISCHE PATENTSCHRIFT

(11) **EP 2 367 247 B1**
(45) Veröffentlichungstag und Bekanntmachung des Hinweises auf die Patenterteilung: **09.03.2016**
(21) Anmeldenummer: 10002979.2
(22) Anmeldetag: 20.03.2010
(51) Int. Cl.: H02G 1/04, H01B 5/10

(54) **Verfahren zum Verlegen von Freileitungsseilen für Hochspannungsfreileitungen**
Method for laying overhead lines for high voltage overhead lines
Procédé de pose de câbles aériens pour câbles aériens haute tension

(43) Veröffentlichungstag der Anmeldung: 21.09.2011
(73) Patentinhaber: Lumpi-Berndorf Draht- und Seilwerk GmbH, 4030 Linz (AT); SAG GmbH, 63225 Langen (DE)
(72) Erfinder: Fiers, Peter, 2560 Berndorf (AT); Pohlmann, Heinrich, 64390 Erzhausen (AT)
(74) Vertreter: von dem Borne, Andreas

(56) Entgegenhaltungen:
- DE-A1- 1 905 748
- DE-C- 749 396
- JP-A- 2002 025 348
- JP-A- 2005 203 127
- US-A1- 2008 156 525

## Beschreibung

Die Erfindung betrifft ein Verfahren zum Verlegen von Freileitungsseilen für Hochspannungsfreileitungen, wobei die zu verlegenden Seile als Verbundseile ausgebildet sind, welche einen Kern aus einem oder einer Vielzahl von Kemdrähten und einen Mantel aus einer Vielzahl von Manteldrähten aufweisen, wobei die Seile an Masten befestigt und zwischen den Masten mit vorgegebener Zugspannung gespannt werden. Solch ein Verfahren ist aus DE-C-749396 bekannt.

Freileitungsseile werden im Hochspannungsbereich zur Stromübertragung verwendet, wobei die Freileitungsseile mittels Klemmen und Isolatoren an Masten befestigt werden. Bei den Masten kann es sich um Tragmasten und um Abspannmasten handeln. Die Mastabstände liegen zum Beispiel bei den 110-kV-Ebenen bei 300 bis 400 m und in den 400 kV-Ebenen bei 400 bis 600 m. Aufgrund der Bogenlänge der durchhängenden Seile und aufgrund den geforderten Sicherheitsabständen der durchhängenden Seile vom Boden müssen die Masten eine entsprechende Höhe aufweisen. In den maßgeblichen Vorschriften werden dabei maximale Zugspannungen für unterschiedliche Leiterseile angegeben; das daraus resultierende Bogenmaß verlangt Masthöhen, wodurch Mindestabstände zwischen den Phasenseilen und anderen unterkreuzenden Leitungen sowie die Bodenabstände bei allen Lastfällen eingehalten werden. Die höchste Zugspannung ergibt sich in der Regel bei einem Lastfall "-5° C und Eislast", der größte Durchhang bei der höchstzulässigen Betriebstemperatur der Leiterseile. Denn der Durchgang vergrößert sich in der Regel bei höheren Temperaturen durch die Ausdehnung des Materials.

Unter Berücksichtigung dieser Randbedingungen wurden im letzten Jahrhundert unterschiedlichste Freileitungen in den verschiedensten Spannungsebenen errichtet. Bei der Installation der Leitungen wurden auch die statischen Belastungen, welche auf die Maste und Gründungen wirken, entsprechend berücksichtigt. Aus verschiedenen Gründen (z. B. Liberalisierung des Strommarktes, Stilllegung von alten Kraftwerken, Einspeisung von Energie aus Windkraftwerken) haben sich in der jüngeren Vergangenheit die Lastflüsse in den Hochspannungsnetzen gravierend verändert, so dass es immer wieder zu Engpässen bei einzelnen Leitungen kommt. Es besteht dabei grundsätzlich das Bedürfnis, die Freileitungsseile für möglichst hohe Übertragungsleistungen auszulegen.

Eine Möglichkeit, Freileitungsseile für höhere elektrische Übertragungsleistungen auszulegen, besteht in der Vergrößerung der Seilquerschnitte. Die Vergrößerung der Seilquerschnitte führt jedoch zu einer erheblichen Erhöhung der Masse der Seile. Die vorhandenen Maste sind dafür in der Regel nicht ausgelegt. Grundsätzlich besteht zwar die Möglichkeit, die Maste auszutauschen und folglich für größere Seilquerschnitte mit höheren elektrischen Übertragungsleistungen auszulegen. Dieses ist jedoch kostenaufwendig und insbesondere zeitaufwendig, zumal in der Regel neue Genehmigungsverfahren durchlaufen werden müssen. Unter Berücksichtigung der einzuhaltenden Normen lassen sich die Seilquerschnitte ohnehin nur geringfügig vergrößern. Eine Sanierung ist für die damit erreichbaren Vorteile in der Regel wirtschaftlich zu aufwendig.

In den letzten fünfzig Jahren wurden in Mitteleuropa vorwiegend Aluminium/Stahlseile oder AIMgSi-Seile (Aldrey-Seile) installiert. Es handelt sich um Verbundseile mit einem Stahlkern und einem Aluminiummantel. Die verwendeten Aluminiumdrähte bzw. aluminiumlegierten Drähte weisen eine hohe Werkstofffestigkeit auf, welche durch das Kaltziehen erreicht wird. Diese Werkstofffestigkeiten werden während der gesamten Betriebszeit der Seile benötigt. Dabei ist die maximale Betriebstemperatur derartiger Freileitungsseile aus mechanischen Gründen auf 80° C limitiert. Werden Seile aufgrund von Kapazitätsengpässen höher belastet, so führt dies zu Überschreitungen der zulässigen Seiltemperatur und in der Folge zu einer Entfestigung der Aluminiumdrähte.

Ausgehend von diesem Problem wurde vor etwa 30 Jahren eine Aluminiumlegierung (TAL) entwickelt, die es ermöglicht, Seile mit höheren Betriebstemperaturen, ohne Entfestigung der Aluminiumdrähte, zu betreiben. Dieser Effekt wird durch den Legierungsbestandteil Zirkon erreicht. Die maximale Betriebstemperatur liegt bei TAL-Drähten bei etwa 150° C. Neuere Entwicklungen ermöglichen Temperaturen bis zu 250° C. Wenn herkömmliche Aluminiumdrähte von Aluminium/Stahlseilen (Al/St-Seilen) durch durchmessergleiche TAL-Drähte ersetzt werden, können bei diesen TAL/Stahl-Seilen entsprechend höhere Stromstärken unter Ausnutzung höherer Betriebstemperatur realisiert werden. Die Übertragungsleistungen können um 50 bis 100 % erhöht werden. Der Vorteil dieser Technologie liegt darin, dass - bedingt durch die selbe Seilkonstruktion - die Maststatik unverändert bleiben kann, da es zu keinen Lasterhöhungen kommt. Nachteilig bei dem Ersatz von herkömmlichen Al/St-Seilen durch TAL/Stahl-Seile ist, dass sich die Seildurchhänge soweit erhöhen, dass die Mindestbodenabstände nicht mehr eingehalten werden können. Der Ersatz herkömmlicher Al/St-Seile durch neuere TAL/Stahl-Seile ist folglich nur bei solchen Leitungen anwendbar, bei denen hinreichend große Bodenabstände zur Verfügung stehen oder aber die möglichen hohen Betriebstemperaturen nicht voll ausgenutzt werden.

Ausgehend von dieser erläuterten Problematik wurden dann in jüngster Vergangenheit neuere Verbundseile entwickelt. So wurden bei den herkömmlichen TAL-/Stahl-Verbundseilen und TAL/Stalum-Seilen der Stahlkern, welcher einen Wärmeausdehnungskoeffizienten von ca. 12 µm/m*K hat, durch eine moderne Stahl-Nickellegierung, nämlich sogenannten Invarstahl ersetzt. Dieser Invarstahl wird auch als HACIN bezeichnet (High Strength Aluminium Clad Invar). Diese Legierung hat einen Wärmeausdehnungskoeffizient im Bereich von 4-6 µm/m*K. Da Aluminium einen Ausdehnungseffizienten von ca. 23 µm/m*K aufweist, ergibt sich beim Gesamtseil (TAL/HACIN) insgesamt ein geringerer Wärmeausdehnungskoeffizient als bei herkömmlichen TAL/StahlSeilen. Werden moderne TAL/HACIN-Verbundseile mit Strom bis zu einer Standardtemperatur von 80° C beaufschlagt, eignen sich diese hinsichtlich thermischer Dehnung geringfügig besser als herkömmliche Seile. Bei weiterer Temperaturerwärmung dehnen sich die Aluminiumdrähte (TAL oder ZTAL) aufgrund des wesentlich höheren Ausdehnungskoeffizienten gegenüber dem HACIN-Stahlkern so weit aus, dass die Drähte ab einer bestimmten Temperatur - dem sogenannten Transitionpunkt - völlig spannungsfrei, das heißt ohne mechanische Spannung, auf dem HACIN-Kem aufliegen. Ab diesem Transitionpunkt ist eine weitere Längenänderung des Gesamtseils im Spannfeld nur noch durch die Längenänderung der HACIN-Drähte geprägt. Dieses beschriebene physikalische Verhalten führt zu einer Kennlinie mit zwei verschiedenen Steigungen. Bei geringerer Temperatur (unterhalb des Transitionpunktes) ist ein höherer Wärmeausdehnungskoeffizient gegeben und bei höherer Temperatur (oberhalb des Transitionpunktes) ist ein geringerer Wärmeausdehnungskoeffizient des Seils gegeben. Dieses Verhalten findet sich grundsätzlich bei allen Verbundseilen bzw. Verbund-Leiterwerkstoffen. Der Transitionpunkt liegt bei herkömmlichen Al/St-Seilen oberhalb von 250° C bis 300° C. Diese Temperaturen sind außerhalb der Gebrauchslasten und können somit nicht genutzt werden. Bei TAL/Stahl oder TAL/Stalum-Seilen liegt der Transitionpunkt ebenfalls noch oberhalb von 200° C und ist somit in der Regel für Leitungen aufgrund der Bodenabstände nicht nutzbar. Bei modernen TAL/HACIN-Seilen liegt dieser Transitionpunkt, welcher gleichsam einen Knickpunkt der Kennlinie bildet, bei etwa 110 bis 140° C.

Verbundseile und insbesondere moderne TAL/HACIN-Verbundseite haben sich in der Praxis folglich grundsätzlich bewährt. Die Technologie ist jedoch weiterentwicklungsfähig. Hier setzt die Erfindung ein.

Im Übrigen kennt man sogenannte "GAP-Seile", welche eine Stahlseele aufweisen, über welche eine Lage (Z)TAL-Profildrähte, welche zum Stahlkern einen Spalt bilden und anschließend eine Lage (Z)TAL-Runddrähte verseilt werden. Der Stahlkern wird im Klemmbereich separiert von den (Z)TAL-Drähten gefasst und mit einer exakt definierten Zugspannung gespannt. Dieses hat zur Folge, dass sich diese Drahtlagen bei einem Temperaturanstieg einem zugspannungsfreien Zustand nähern und ab dem Knie- oder Transitionpunkt nur noch der Stahl die Zugspannung übernimmt. Allerdings sind solche "GAP-Seile" aufgrund der Spaltkonstruktion sehr schwer zu installieren. Die Montagezeit verdoppelt sich und es bedarf dabei besonders ausgebildeter Montageteams.

Der Erfindung liegt die Aufgabe zu Grunde, ein Verfahren zum Verlegen von Freileitungsseilen für Hochspannungsfreileitungen der eingangs beschriebenen Art zu schaffen, durch welches der Einsatzbereich bzw. Betriebsbedingungen von Verbundseilen aus herkömmlichen Materialien optimiert werden kann.

Zur Lösung dieser Aufgabe wird ein Verfahren zum Verlegen von Freileitungsseilen für Hochspannungsfreileitungen gemäß Anspruch 1 vorgeschlagen.

Dieses Verfahren lässt sich bei (Z) TAL/HACIN-Seilen verwenden, das heißt als Kerndrähte werden HACIN-Drähte und als Manteldrähte (Z)TAL-Drähte verwendet. Die Seile werden dabei mit der Maßgabe gereckt, dass die Manteldrähte, z. B. die (Z)TAL-Drähte plastisch gereckt werden und dass die Kemdrähte, z. B. die HACIN-Drähte (lediglich) elastisch gereckt werden.

Die Erfindung geht dabei von der Erkenntnis aus, dass sich durch eine Reckung bzw. Vorreckung der Verbundseile im plastischen Bereich der Transitionpunkt zu niedrigen Temperaturen hin verschieben lässt. Durch eine solche Verschiebung des Transitionpunktes bzw. Knickpunktes der Wärmeausdehnungskennlinie ergibt sich folglich auch bei höheren Temperaturen ein wesentlich geringerer Seildurchhang. Dieses ermöglicht eine optimale Ausnutzung der technischen Vorteile der (Z)TAL/HACIN-Seile. Denn die Seile können ohne Vergrößerung des Querschnitts und folglich auch ohne Vergrößerung der Masse bei höheren Temperaturen und folglich auch mit höheren Übertragungsleistungen betrieben werden, ohne dass sich dadurch der Seildurchhang nennenswert ändert. Die Einstellung des Transitionpunktes bereits bei sehr niedrigen Temperaturen führt dazu, dass die gesamte Zugkraft bei niedrigen Temperaturen durch den HACIN-Kem übernommen wird. Das Wärmeausdehnungsverhalten wird folglich gezielt verändert, so dass bei richtig dauerhaft eingespannten Seilen geringere Seildurchhänge bei hohen Seiltemperaturen auftreten. Bei Verwendung solcher Seile bzw. bei der erfindungsgemäßen Verlegung derartiger Seile erfahren dann die Tragmasten - verglichen mit herkömmlichen Seilen - durch den gleichen Windstaudruck keine höheren Belastungen und aufgrund der gleichen Zugkräfte, ausgelegt für -5° C plus Eislast auch keine Erhöhung der Abspannmaste. Unter Einhaltung der Bodenabstände kann nun mit den erfindungsgemäß verlegten Seilen eine wesentlich höhere Energieübertragung auf bestehenden Leitungen realisiert werden.

Im Gegensatz zu den eingangs beschriebenen GAP-Seilen mit Spaltkonstruktion kann im Rahmen der Erfindung auf herkömmliche kompakte Seilkonstruktionen und insbesondere TAL/HACIN- bzw. (Z)TAL/HACIN-Seile zurückgegriffen werden. Diese kompakten Seilkonstruktionen sind mit den Seilkonstruktionen herkömmlicher AL/ST-Seile identisch, so dass sie mit üblicher Klemmtechnik befestigt und nach Standardmontagemethoden installiert werden können. Im Rahmen der Erfindung ist es dabei von besonderer Bedeutung, dass die (Z)TAL/HACIN-Seile im Zuge der Montage vorgereckt und dabei die (Z)TAL-Drähte plastisch verformt werden, um den Transitionpunkt soweit als möglich nach unten zu verschieben. Die HACIN-Drähte bleiben dabei im elastischen Bereich.

Es ist dabei grundsätzlich möglich, die erforderliche Vorreckung mit der verbundenen plastischen Verformung bereits im Zuge der Produktion der Leiterseile, das heißt gleichsam noch "im Werk" vorzunehmen.

Um jedoch die dann gegebenenfalls bei der Montage der Seile auftretenden Probleme zu vermeiden, schlägt die Erfindung in einer besonders bevorzugten Ausführungsform vor, die Seile erst während des Verlegens und besonders bevorzugt erst nach der Befestigung der Seile an den Masten vorzurecken. Denn es ist wünschenswert, dass zum Zeitpunkt der Seilverlegung (noch) alle Drähte gleich gespannt sind und keine Lageverschiebungen während der Verlegetätigkeit stattfinden. Nach der Installation der Seile sollen jedoch die (Z)TAL-Drähte eine geringere Zugspannung aufweisen als die HACIN-Drähte.

Um dieses zu erreichen, besteht die Möglichkeit, die (Z)TAL/HACIN-Seile zunächst konventionell zu fertigen bzw. konventionell gefertigte Verbundseile, zum Beispiel (Z)TAUHACIN-Seile zu verwenden und diese auch mit herkömmlicher Technik auf der Leitung von der Trommel über die Bremse und die Laufrollen bis zum Windenplatz zu verlegen. Erst anschließend wird das Leiterseil mit sehr hohen Kräften in einem vorgegebenen Zeitraum gereckt, so dass es zu einer plastischen Verlängerung der Metalldrähte, z. B. TAL-Drähte kommt. Denn bevorzugt erfolgt die Reckung mit der Maßgabe, dass (lediglich) die Manteldrähte, zum Beispiel die TAL-Drähte, plastisch verlängert werden, während die Kern-Drähte, zum Beispiel die HACIN-Drähte, lediglich im elastischen Bereich verlängert werden.

Die Höhe der Plastifizierung ist abhängig von der Höhe der Zugkraft und der Zeit der Belastung. Bevorzugt erfolgt die Vorreckung über einen Zeitraum von mehr als 10 Minuten, vorzugsweise mehr als 30 Minuten. So kann ein Zeitraum von 10 bis 120 Minuten, zum Beispiel 15 bis 90 Minuten zweckmäßig sein. Praktische Untersuchungen haben gezeigt, dass ein Zeitraum von 30 bis 60 Minuten bereits eine erhebliche Plastifizierung der (Z)TAL-Drahtlagen bewirken kann.

Die plastische Vorreckung erfolgt dabei besonders bevorzugt mit einer Zugkraft, welche in etwa 30 bis 60 % der (rechnerischen) Seilbruchkraft entspricht. Wird nun anschließend das Leiterseil mit den üblichen Zugspannungen (15 bis 20 % der rechnerischen Seilbruchkraft) für die die Leitung ausgelegt ist, gespannt, so beobachtet man, dass bei der Erwärmung der Leiterseile der Knickpunkt bzw. Transitionpunkt sich um etwa 10 bis 30 K zu geringeren Temperaturen verschiebt. Die Größe dieser Verschiebung ist vom Querschnittsverhältnis (Z)TAL/HACIN, der Höhe des Überziehens bzw. der Höhe der Vorreckung und der Einwirkungszeit abhängig.

Vorteilhaft ist, dass die Durchführung des Überziehens bzw. die Durchführung der Vorreckung mit den gleichen Maschinen, bzw. den gleichen Spannvorrichtungen erfolgen kann, die auch beim Verlegen der Leiterseile eingesetzt werden. Es kann jedoch auch vorteilhaft sein, eigene Maschinen bzw. Hubzuggeräte als Spannvorrichtungen einzusetzen, mit denen dann für einen relativ kurzen Zeitraum die erforderlichen Zugkräfte aufgebracht werden. Dadurch lässt sich der Verlegeprozess optimieren und beschleunigen, denn während die hohen Zugkräfte mit den speziellen Vorrichtungen aufgebracht werden, kann die Winde für die Verlegung der weiteren Leiterseile bereits wieder benutzt werden.

Es wurde bereits erläutert, dass die erforderlichen Zugkräfte besonders bevorzugt während des Verlegens bzw. nach dem Befestigen der Leiterseile an den Masten eingebracht werden. Eine Verstärkung der ohnehin vorhandenen Masten ist in der Regel dennoch nicht erforderlich. Jedenfalls im Bereich der Tragmaste die nur geringe zusätzliche Lasten erfahren, sind Verstärkungsmaßnahmen in der Regel nicht erforderlich. An den Abspannmasten können jedoch Verstärkungen zweckmäßig bzw. erforderlich sein, und zwar in der Regel am Windenplatz und am Trommelplatz, wo die Seilaufhängepunkte z. B. mittels Kopfanker bei der Montage verstärkt werden. Durch Umhängen der Laufrollen zum Mastschaft können für den Zeitraum der hohen Krafteinleitung und des hohen Seilzuges die Traversen ebenfalls entlastet werden.

Die erforderliche Vorreckung kann besonders bevorzugt als Zugreckung durch Aufbringen erforderlicher Spannkräfte aufgebracht werden. Alternativ oder ergänzend können jedoch auch durch gezielte Umlenkung der Seile über definierte Biegeradien Plastifizierungen der (Z)TAL-Drähte erfolgen. Dabei sollte sich der Ort dieser Plastifizierung erst hinter der ersten Laufrolle befinden, um Aufkorbungen an den Seilen zu verhindern.

## Patentansprüche

1. Verfahren zum Verlegen von Freileitungsseilen für Hochspannungsfreileitungen,
wobei die zu verlegenden Seile als Verbundseile ausgebildet sind, welche einen Kern aus einem oder einer Vielzahl von Kerndrähten und einen Mantel aus einer Vielzahl von Manteldrähten aufweisen,
wobei die Seile an Masten befestigt und zwischen den Masten mit vorgegebener Zugspannung gespannt werden,
wobei die Kerndrähte als HACIN-Drähte und die Manteldrähte als TAL-Drähte oder ZTAL-Drähte ausgebildet sind,
**dadurch gekennzeichnet, dass** die Seile nach dem Befestigen an den Masten über einen vorgegebenen Zeitraum mit einer vorgegebenen Kraft derart gereckt werden, dass die als TAL-Drähte oder ZTAL-Drähte ausgebildeten Manteldrähte plastisch und die als HACIN-Drähte ausgebildeten Kerndrähte elastisch unter Verschiebung des Transitionspunktes zu niedrigen Temperaturen hin gereckt werden.

2. Verfahren nach Anspruch 1, **dadurch gekennzeichnet, dass** die Seile über einen Zeitraum von mehr als 10 Minuten, vorzugsweise mehr als 30 Minuten, zum Beispiel über einen Zeitraum von 10 bis 120 Minuten, vorzugsweise 15 bis 90 Minuten, besonders bevorzugt 30 bis 60 Minuten plastisch gereckt werden.

3. Verfahren nach Anspruch 1 oder 2, **dadurch gekennzeichnet, dass** die Seile mit einer Kraft gereckt werden, welche 25 bis 75 % der rechnerischen Seilbruchkraft, vorzugweise 30 bis 60 % der rechnerischen Seilbruchkraft der Seile entspricht.

## Claims

1. A method for the laying of overhead transmission line cables for high-voltage overhead transmission lines, wherein
the cables that are to be laid are designed as composite cables, which have a core of one or a multiplicity of core wires, and a sheath of a multiplicity of sheath wires, wherein
the cables are attached to masts and are stretched between the masts with a prescribed tensile stress, wherein
the core wires are designed as HACIN-wires, and the sheath wires are designed as TAL-wires or ZTAL-wires,
**characterised in that**,
after attachment to the masts the cables are stretched for a prescribed period of time with a prescribed force such that the sheath wires designed as TAL-wires or ZTAL-wires are stretched plastically, and the core wires designed as HACIN-wires are stretched elastically, with displacement of the transition point to low temperatures.

2. The method in accordance with claim 1,
**characterised in that**,
the cables are plastically stretched for a period of time of more than 10 minutes, preferably more than 30 minutes, for example, for a period of time of 10 to 120 minutes, preferably of 15 to 90 minutes, particularly preferably of 30 to 60 minutes.

3. The method in accordance with claim 1 or 2,
**characterised in that**,
the cables are stretched with a force that corresponds to 25 to 75 % of the calculated cable fracture force, preferably 30 to 60 % of the calculated fracture force of the cables.

## Revendications

1. Procédé pour poser des câbles aériens pour des lignes aériennes à haute tension,
dans lequel les câbles à poser sont conçus en tant que câbles composites qui comportent une âme constituée d'un ou d'une pluralité de fils d'âme et d'une enveloppe constituée d'une pluralité de fils d'enveloppe,
dans lequel les câbles sont fixés sur des mâts et sont tendus entre les mâts avec une contrainte de traction prescrite,
dans lequel les fils d'âme sont réalisés en tant que fils en HACIN (Invar revêtu d'aluminium à haute résistance) et les fils d'enveloppe étant réalisés en tant que fils en TAL (alliage d'aluminium résistant à la température) ou en ZTAL (alliage d'aluminium super-résistant à la température),
**caractérisé en ce que** les câbles, après la fixation sur les mâts, sont étirés pendant un intervalle de temps prédéterminé avec une force prédéterminée de telle sorte que les fils d'enveloppe réalisés en tant que fils en TAL ou en ZTAL sont étirés plastiquement et les fils d'âme réalisés en tant que fils en HACIN sont étirés élastiquement en décalant le point de transition vers des basses températures.

2. Procédé selon la revendication 1, **caractérisé en ce que** les câbles sont étirés plastiquement pendant un intervalle de temps supérieur à 10 minutes, de préférence supérieur à 30 minutes, par exemple pendant un intervalle de temps de 10 à 120 minutes, de préférence de 15 à 90 minutes et de manière particulièrement préférée, de 30 à 60 minutes.

3. Procédé selon la revendication 1 ou 2, **caractérisé en ce que** les câbles sont étirés avec une force qui correspond à 25 à 75 % de la force de rupture de câble déterminée par calcul, de préférence à 30 à 60 % de la force de rupture de câble déterminée par calcul.
